# EUROPEAN PATENT SPECIFICATION

(11) **EP 4 257 571 B1**
(45) Date of publication and mention of the grant of the patent: **08.04.2026**
(21) Application number: 23166107.5
(22) Date of filing: 31.03.2023
(51) Int. Cl.: C04B 28/12, C08L 97/00, C09D 197/00

(54) **COMPOSITION FOR A LIGHTENED FINISHING SCREED**
ZUSAMMENSETZUNG FÜR EINEN AUFGEHELLTEN ESTRICH
COMPOSITION POUR UNE POUTRE LISSEUSE DE FINITION ALLÉGÉE

(30) Priority: 06.04.2022 IT 202200006791
(43) Date of publication of application: 11.10.2023
(73) Proprietor: Diasen S.r.l., 60047 Sassoferrato (AN) (IT)
(72) Inventor: MINGARELLI, Diego, 60044 FABRIANO (AN) (IT)
(74) Representative: Cutropia, Gianluigi

(56) References cited:
- EP-A1- 3 375 765
- SALA ELISA ET AL: "Lightweight natural lime composites for rehabilitation of Historical Heritage", CONSTRUCTION AND BUILDING MATERIALS, ELSEVIER, NETHERLANDS, vol. 125, 13 August 2016 (2016-08-13), pages 81 - 93, XP029751149, ISSN: 0950-0618, DOI: 10.1016/J.CONBUILDMAT.2016.08.033

## Description

The present invention relates to a composition for a lightened finishing screed.

In the building industry, a screed is a horizontal construction element used to achieve one or more of the following objectives: to level a surface, making it perfectly flat, to distribute the load of the elements above said surface, and to accommodate a final flooring.

Generally speaking, the screed is deposited on a lightweight concrete substrate (subgrade or slab) used to accommodate pipes and service cables or on a floor slab. The thickness of the screed varies according to the type of setting. By way of example, in a building, the thickness of the screed can vary from 1 to 8 cm.

The main function of the screed is to level the surface on which a flooring is to be laid. For such a purpose, an adhesive is first spread on the screed and then a ceramic, stone or wood flooring is laid. In such a case, according to the current regulations, the screed must have a mechanical strength greater than or equal to 5 Newtons/mm² in order to be suitable for laying a floor.

Screed generally consists of three materials: binder, inert material and water. The binder is cement and the inert material is sand. The proportion of cement to sand is adjusted to ensure a mechanical strength above 5 Newtons/mm².

However, the traditional screeds of the prior art are impaired by some drawbacks represented by high weight and high thermal conductivity. A traditional sand and cement screed has a specific gravity of about 2,000 kg/m³. Such a high weight of the screed distributed over the various floors of a building will significantly weigh down the structure of the building, requiring an oversizing of the load-bearing structures of the building, with a significant increase in costs.

In addition, it must be considered that sand and concrete are thermal conductors and therefore they are not capable of guaranteeing any thermal insulation. As a result, during the hot season, the heat propagates on the screed, overheating the interior of the building, whereas during the cold season, the cold propagates on the screed, cooling the interior of the building.

Moreover, the raw materials of the screed have a high ecological and environmental impact. In fact, cement is obtained by firing limestone, clay or marl at a high temperature (about 1,450°C). Thus, the production of cement has a high ecological and environmental impact. Moreover, sand is extracted from quarries and is not a renewable source.

Lightened screeds are known in order to eliminate the drawbacks related to the weight of screed, at least partially. Lightened screeds use cement as binder, and clay as inert material instead of sand. Since clay is lighter than sand, such a type of lightened screed has a specific gravity of about 1,000 kg/m³, i.e. half that of a traditional screed.

Furthermore, clay is a thermal insulator. Therefore, a lightened screed comprising cement and clay has a thermal conductivity λ = 0.2-0.3, which guarantees some degree of thermal insulation.

In addition, cement is not permeable to water, and consequently such a type of lightened screed has a water vapor diffusion resistance coefficient (µ) greater than 5, making the screed non-breathable.

A type of lightened screed that comprises cement as binder, and perlite as inert material is also known. Such a type of lightened screed has a mechanical, thermal and weight performance that is substantially similar to that of the lightened screed comprising cement and clay.

In any case, lightened screeds have cement as binder, which has a high ecological and environmental impact for its production, and clay or perlite as inert material, i.e. raw materials that are obtained from quarries and therefore are not renewable sources.

EP3375765 describes a sprayable external thermal insulation system for buildings composed of the following materials: Cork, Natural Hydraulic Lime, Expanded Amorphous Silica, Pumice, Perlite, Natural Fibers and Additives.

The purpose of the present invention is to eliminate the drawbacks of the prior art by disclosing a composition that is capable of providing a lightened finishing screed with a sufficient mechanical strength for the laying of flooring and at the same time with a lower specific weight than the specific weight of the lightened screeds of the prior art.

Another purpose of the present invention is to disclose such a composition that is capable of providing a lightened screed with a high thermal insulation performance from both heat and cold while ensuring total comfort to the rooms.

Still another purpose of the present invention is to provide such a composition for lightened screed that uses raw materials from renewable sources or otherwise having a lower ecological and environmental impact than the raw materials used in the screeds of the prior art.

Another purpose of the present invention is to disclose such a composition that is capable of providing a lightened screed characterized by an excellent performance in sound insulation, fire resistance and water vapor resistance.

These purposes are achieved by the composition in accordance with the invention, having the characteristics of the appended independent claim 1.

Advantageous achievements of the invention appear from the dependent claims.

Further features of the invention will appear clearer from the following detailed description, referring to its purely illustrative and thus not limiting embodiments, illustrated with the help of the appended drawings, wherein:
Fig. 1 is a graph illustrating the particle size curves of some components and a first embodiment of the composition according to the invention; and
Fig. 2 is a graph illustrating the particle size curves of some components and a second embodiment of the composition according to the invention.

Hereafter, unless otherwise specified, the percentages are understood as weight percentage of the individual component with respect to the total weight of the final composition.

The composition for the finishing screed according to the invention comprises a binder and an inert material.

The binder comprises hydraulic lime. Hydraulic lime is used instead of cement because the hydraulic lime is obtained by firing limestone or marl at a temperature of about 1,000°C, which is a lower temperature than the firing temperature of cement. Therefore, the production of hydraulic lime has a lower environmental impact than cement.

However, the hydraulic lime gives a lower compressive strength than cement to the screed. For such a reason, the applicant had to find appropriate materials to use as inert materials in order to obtain a screed with a desired compressive strength equal to or greater than 5 Newton/mm².

The percentage of hydraulic lime in the composition is comprised between 20% and 36%, preferably 26%-30%. Such a percentage ensures a proper binding effect among the inert materials of the composition.

The inert materials comprise cork, expanded clay, expanded perlite, diatomite powder and fiber material.

Cork is used for several reasons. Cork is a renewable source since it is of plant origin. In addition, cork greatly lightens the screed and gives excellent thermal insulation and soundproofing properties to the screed. Moreover, cork is a non-flammable material.

For these reasons, efforts were made to maximize the percentage of cork in the composition. After several experimental tests, the applicant found out that for very high percentages of cork, the resulting screed did not guarantee the desired compressive strength greater than or equal to 5 Newton/mm².

The percentage of cork in the composition is comprised between 35% and 50%, preferably 39%-44%.

The applicant ascertained that a screed obtained with a composition having such a high percentage of cork had longer setting and binding times than the traditional lightened screeds. Therefore, in order to reduce the setting and binding times of the screed, it was decided to add expanded clay in the composition, in much lower percentages than the screeds of the prior art.

The percentage of expanded clay in the composition is comprised between 10% and 16%, preferably 12%-14%.

The applicant ascertained that a screed obtained with a composition having such a high percentage of cork could be damaged by moisture infiltration. Therefore, in order to improve the hydrometric characteristics of the screed, expanded perlite was added to the composition. In fact, expanded perlite is able to retain water, preventing the formation of moisture that could damage the cork component contained in the screed.

The percentage of expanded perlite in the composition is comprised between 6% and 13%, preferably 8%-10%.

The applicant ascertained that a screed obtained with a composition having such a high percentage of cork tended to form cracks, especially in the case where a screed of reduced thickness is to be made, such as a screed having a thickness of less than 3 cm. In order to increase the crack resistance of the screed, the applicant added fiber material, preferably cellulose fibers, into the composition.

The percentage of diatomite powder is comprised between 3% and 7%, preferably 4%-6%. Diatomite powder is a sedimentary siliceous rock powder of organic origin and is the fossil residue of microscopic algae of the diatom family. Such a diatomite powder has a particle size lower than 1 mm.

The addition of diatomite powder and the study of the particle size and performance mix of the materials of the composition were useful to obtain a regular particle size curve of the composition, in order to obtain a screed characterized by high mechanical and insulating performance, as well as by breathability.

The percentage of fiber material in the composition is comprised between 0.4% and 1%.

The applicant studied the particle size of the various components of the composition in order to achieve a good binding between the various components and the best possible compactness of the screed of the composition, which is reflected in a higher mechanical compressive strength. Thus, by studying the particle size of the various components, it was possible to maximize the percentage of cork in order to obtain a screed with a compressive strength greater than 5 Newtons/mm².

Among the various types of hydraulic lime available on the market, powdered hydraulic lime with a particle size of less than 200 µm was chosen, that is to say, particles having a maximum diameter of less than 200 µm.

As for cork, it is commercially available in large particle size. Therefore, the applicant decided to grind cork so as to obtain cork powder having a particle size of less than 3 mm, that is to say, particles of cork having a maximum diameter of less than 3 mm

Among the various types of expanded clay available on the market, expanded clay powder having a particle size of less than 3 mm, that is to say, expanded clay particles having a maximum diameter of less than 3 mm, was chosen.

Among the various types of expanded perlite available on the market, an expanded perlite powder with a particle size of less than 1 mm, that is to say, expanded perlite particles having a maximum diameter of less than 1 mm, was chosen.

Such a choice in terms of particle size was made precisely so that the particles of hydraulic lime and expanded perlite, which have a maximum diameter of 1 mm, can work their way into and bind with the particles of cork and clay, which have a maximum diameter of 3 mm. In this way, the screed obtained from such a composition has a compact shape with minimal voids between the particles of the various components.

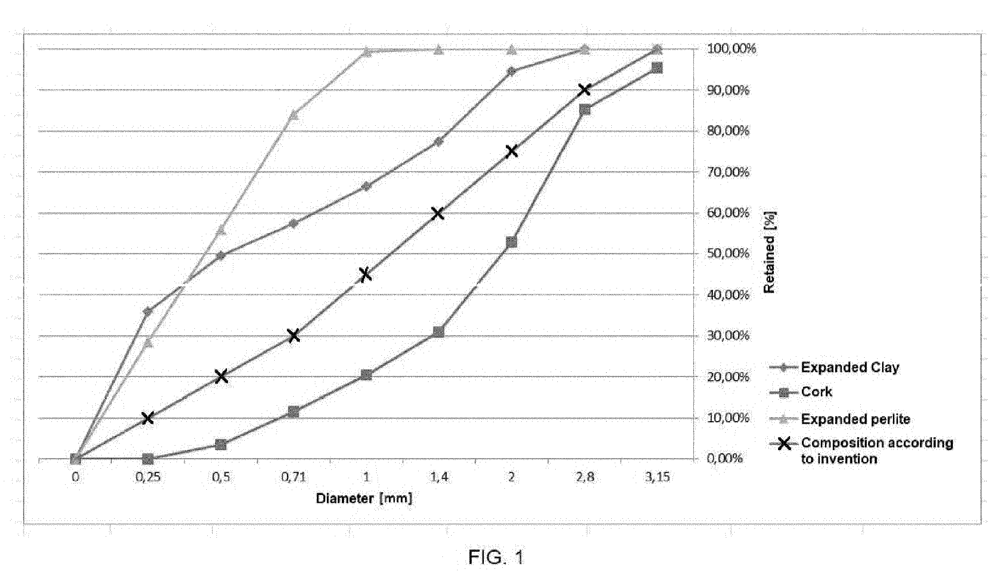

Fig. 1 is a diagram illustrating the particle size curves of cork, expanded clay, expanded perlite and of the composition according to the invention.

The particle size curves were made using a cylinder with sieves arranged at different levels of the cylinder and having meshes with decreasing diameters from 3.15 mm to 0.25 mm.

The diagram in Fig. 1 shows that the composition according to the invention has a particle size curve in which 100% of the particles have a diameter of less than 3 mm. Due to the choice of particle size of the various components, the particle size curve of the composition has a substantially linear trend that ensures the maximum compactness and binding between the particles of the various components of the composition.

Optionally, the composition according to the invention may contain aerating additives, such as surfactants. Such aerating additives may be of organic and/or inorganic type.

A first example of a composition according to the invention is shown below.

| COMPONENT | WEIGHT PERCENTAGE |
|---|---|
| Hydraulic lime | 28.5 |
| Cork | 40 |
| Expanded clay | 13.25 |
| Expanded perlite | 8.25 |
| Diatomite powder | 5 |
| Cellulose fiber | 0.50 |
| Organic additives | 4.49 |
| Inorganic additives | 0.01 |

### Example 1

The composition according to the invention is a powder product and is mixed with water to obtain a pasty product for making a lightened screed. Such a pasty product can be sprayed by means of a hose with a spray nozzle, thanks precisely to the particle size of the various components of the composition that are mixed with water.

The screed sets after 24 hours and after 28 days it matures and is ready for laying a floor.

The screed obtained with the composition according to the invention showed a significantly better performance than the lightened screeds of the prior art.

The screed obtained with the composition according to the invention showed the following characteristics:
- a specific gravity of 380 kg/m3, i.e., a specific gravity of less than 1/5 of the specific gravity of a conventional screed and less than 1/2 of the specific gravity of a lightened screed according to the prior art;
- a thermal conductivity (λ) equal to 0.047, that is to say, a thermal conductivity less than 1/4 of the thermal conductivity of a lightened screed according to the prior art;
- a water vapor diffusion resistance coefficient (µ) equal to 4, thus lower than the water vapor diffusion resistance coefficient of a lightened screed according to the prior art;
- no cracking occurred for a screed with a thickness equal to 3 cm.

Advantageously, the composition according to the invention may also include rubber powder, such as rubber powder obtained from the recycling of end-of-life tires, known by the abbreviation ELT.

Rubber powder reduces the dynamic stiffness of the screed, but increases its sound insulation capabilities.

The percentage of rubber powder in the composition is comprised between 3% and 5%.

The rubber powder must have a particle size comparable to the particle size of cork and expanded clay. Therefore, the rubber powder has a particle size of less than 3 mm, that is to say, rubber particles with a maximum diameter of 3 mm.

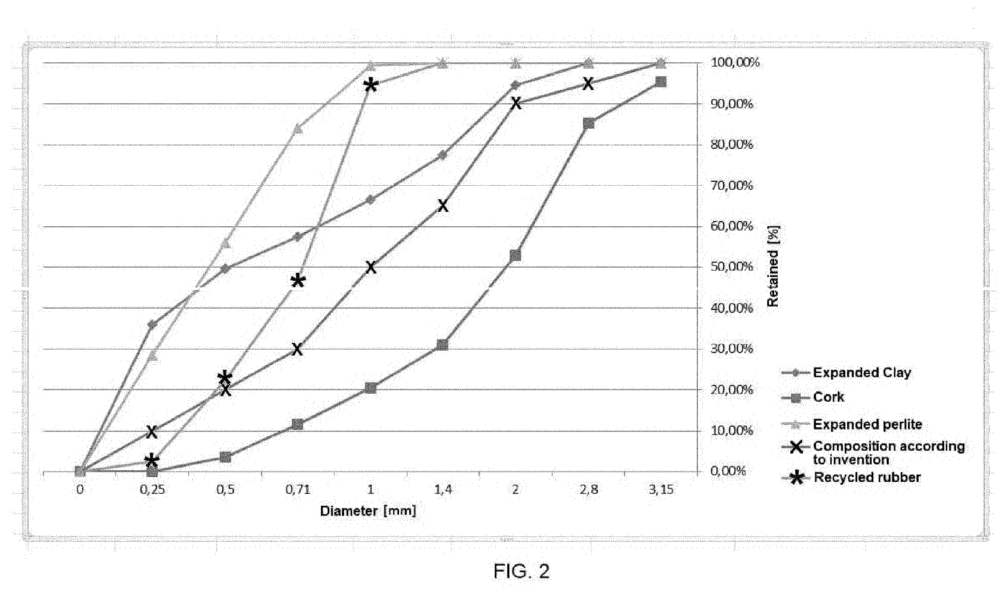

Fig. 2 illustrates a graph as in Fig. 1, wherein the particle size curve of the rubber powder has also been added. As shown in the graph of Fig. 2, the particle size curve of the composition according to the invention is substantially similar to that of Fig. 1. Therefore, also the composition with rubber powder ensures a good compactness and a good binding between the various particles of the various components.

A second example of a composition according to the invention is shown below.

| COMPONENT | WEIGHT PERCENTAGE |
|---|---|
| Hydraulic lime | 28.5 |
| Cork | 40 |
| Expanded clay | 9.25 |
| Expanded perlite | 8.25 |
| Diatomite powder | 5 |
| Rubber powder | 4 |
| Cellulose fiber | 0.5 |
| Organic additives | 4.49 |
| Inorganic additives | 0.01 |

### Example 2

In the composition of Example 2, compared to the composition of Example 1, the percentages of expanded clay have been slightly decreased in order to add the rubber powder.

Equivalent variations and modifications may be made to the present embodiments of the invention, within the scope of a person skilled in the art, but still within the scope of the invention as expressed by the appended claims.

## Claims

1. Composition for a lightened finishing screed comprising a binder and inert materials;
wherein
the binder comprises hydraulic lime; and
the inert materials comprise: cork, expanded perlite, and fiber material;
**characterized in that**
the inert materials comprise also expanded clay and diatomite powder;
wherein
the weight percentage of cork is comprised between 35% and 50% relative to the total weight of the composition;
the weight percentage of expanded clay is comprised between 10% and 16% relative to the total weight of the composition;
the weight percentage of expanded perlite is comprised between 6% and 13% relative to the total weight of the composition;
the weight percentage of diatomite powder is comprised between 3% and 7% relative to the total weight of the composition;
the weight percentage of fiber material is comprised between 0.4% and 1% relative to the total weight of the composition; and
the weight percentage of hydraulic lime is comprised between 20% and 36% relative to the total weight of the composition.

2. The composition according to claim 1, wherein said fiber material comprises cellulose fibers.

3. The composition according to claim 1 or 2, wherein said hydraulic lime is in powder form with particles having a particle size of less than 1 µm, said cork is in powder form with particles having a particle size of less than 3 mm, said clay is in powder form with particles having a particle size of less than 3 mm, said expanded perlite is in powder form with particles having a particle size of less than 1 mm, and said diatomite powder has particles having a particle size of less than 1 mm.

4. The composition according to any one of the preceding claims, further comprising aerating additives.

5. The composition according to any one of the preceding claims, further comprising rubber powder.

6. The composition according to claim 5, wherein the weight percentage of rubber powder is comprised between 3% and 5% relative to the total weight of the composition.

7. The composition according to claim 5 or 6, wherein said rubber powder has particles having a particle size of less than 3 mm.

## Patentansprüche

1. Zusammensetzung für einen Leichtestrich, umfassend ein Bindemittel und Inertstoffe;
wobei
das Bindemittel hydraulischen Kalk umfasst; und
die Inertstoffe Folgendes umfassen: Kork, geblähten Perlit und Faserstoffe;
**dadurch gekennzeichnet, dass**
die Inertstoffe auch Blähton und Kieselgurpulver umfassen;
wobei
der Gewichtsprozentsatz von Kork 35 bis 50 % in Bezug auf das Gesamtgewicht der Zusammensetzung beträgt;
der Gewichtsprozentsatz von Blähton 10 bis 16 % in Bezug auf das Gesamtgewicht der Zusammensetzung beträgt;
der Gewichtsprozentsatz von geblähtem Perlit 6 bis 13 % in Bezug auf das Gesamtgewicht der Zusammensetzung beträgt;
der Gewichtsprozentsatz von Kieselgurpulver 3 bis 7 % in Bezug auf das Gesamtgewicht der Zusammensetzung beträgt;
der Gewichtsprozentsatz von Faserstoffen 0,4 bis 1 % in Bezug auf das Gesamtgewicht der Zusammensetzung beträgt; und
der Gewichtsprozentsatz von hydraulischem Kalk 20 bis 36 % in Bezug auf das Gesamtgewicht der Zusammensetzung beträgt.

2. Zusammensetzung nach Anspruch 1, wobei die Faserstoffe Zellulosefasern umfassen.

3. Zusammensetzung nach Anspruch 1 oder 2, wobei der hydraulische Kalk in Form von Pulver mit Partikeln einer Korngröße von weniger als 1 µm vorliegt, der Kork in Form von Pulver mit Partikeln einer Korngröße von weniger als 3 mm vorliegt, der Blähton in Form von Pulver mit Partikeln einer Korngröße von weniger als 3 mm vorliegt, der geblähte Perlit in Form von Pulver mit Partikeln einer Korngröße von weniger als 1 mm vorliegt und das Kieselgurpulver Partikel einer Korngröße von weniger als 1 mm aufweist.

4. Zusammensetzung nach einem der vorstehenden Ansprüche, ferner umfassend Additive vom auflockernden Typ.

5. Zusammensetzung nach einem der vorstehenden Ansprüche, ferner umfassend Gummipulver.

6. Zusammensetzung nach Anspruch 5, wobei der Gewichtsprozentsatz von Gummipulver 3 bis 5 % in Bezug auf das Gesamtgewicht der Zusammensetzung beträgt.

7. Zusammensetzung nach Anspruch 5 oder 6, wobei das Gummipulver Partikel einer Korngröße von weniger als 3 mm aufweist.

## Revendications

1. Composition pour une chape de finition allégée comprenant un liant et des matériaux inertes;
où
le liant comprend de la chaux hydraulique ; et
les matériaux inertes comprennent : du liège, de la perlite expansée et un matériau fibreux ;
**caractérisée en ce que**
les matériaux inertes comprennent également de l'argile expansée et de la poudre de diatomite ; où
le pourcentage en poids de liège est compris entre 35 % et 50 % par rapport au poids total de la composition ;
le pourcentage en poids d'argile expansée est compris entre 10 % et 16 % par rapport au poids total de la composition ;
le pourcentage en poids de perlite expansée est compris entre 6 % et 13 % par rapport au poids total de la composition ;
le pourcentage en poids de perlite expansée est compris entre 6 % et 13 % par rapport au poids total de la composition ;
le pourcentage en poids de poudre de diatomite est compris entre 3 % et 7 % par rapport au poids total de la composition ;
le pourcentage en poids de matériau fibreux est compris entre 0,4 % et 1 % par rapport au poids total de la composition ; et
le pourcentage en poids de chaux hydraulique est compris entre 20 % et 36 % par rapport au poids total de la composition.

2. Composition selon la revendication 1, où ledit matériau fibreux comprend des fibres de cellulose.

3. Composition selon la revendication 1 ou 2, où ladite chaux hydraulique se présente sous forme de poudre dont les particules ont une taille inférieure à 1 µm, ledit liège se présente sous forme de poudre dont les particules ont une taille inférieure à 3 mm, ladite argile se présente sous forme de poudre dont les particules ont une taille inférieure à 3 mm, ladite perlite expansée se présente sous forme de poudre dont les particules ont une taille inférieure à 1 mm, et ladite poudre de diatomite a des particules dont la taille est inférieure à 1 mm.

4. Composition selon l'une quelconque des revendications précédentes, comprenant en outre des additifs du type aérant.

5. Composition selon l'une quelconque des revendications précédentes, comprenant en outre de la poudre de caoutchouc.

6. Composition selon la revendication 5, où le pourcentage en poids de poudre de caoutchouc est compris entre 3 % et 5 % par rapport au poids total de la composition.

7. Composition selon la revendication 5 ou 6, où ladite poudre de caoutchouc a des particules dont la taille est inférieure à 3 mm.
